# EUROPÄISCHE PATENTSCHRIFT

(11) **EP 0 587 987 B1**
(45) Veröffentlichungstag und Bekanntmachung des Hinweises auf die Patenterteilung: **27.11.1996**
(21) Anmeldenummer: 93107433.0
(22) Anmeldetag: 07.05.1993
(51) Int. Cl.: F16F 15/02, F16F 13/00, F16F 1/44, B60G 17/015

(54) **Aktives Stellelement**
Active actuator
Dispositif de positionnement actif

(30) Priorität: 15.09.1992 DE 4230799
(43) Veröffentlichungstag der Anmeldung: 23.03.1994
(73) Patentinhaber: Firma Carl Freudenberg, D-69469 Weinheim (DE)
(72) Erfinder: Kurr, Klaus, Dr., W-6940 Weinheim (DE); Röhner, Gerhard, W-6944 Hemsbach (DE); Eckel, Hand-Gerd, Dr., W-6947 Laudenbach (DE); Burger, Stefan, W-6940 Weinheim (DE)

(56) Entgegenhaltungen:
- DE-A- 3 509 000
- DE-A- 4 116 270
- FR-A- 2 642 489
- FR-A- 2 642 493
- US-A- 3 957 127

## Beschreibung

Die Erfindung betrifft ein aktives Stellelement nach dem Oberbegriff von Anspruch 1.

Ein Stellelement der im Oberbegriff von Anspruch 1 angegebenen Art ist aus DE-A- 41 16 270 bekannt.

Aus DE-B- 39 18 753 ist ein Stellelement bekannt bei dem die Verformungseinheit von einer Flüssigkeit gebildet wird, die in einem überwiegend nach außen abgeschlossenen Raum enthalten ist. Das Stellelement dient primär der elastischen Lagerung von Aggregaten und kann nur unter bestimmten Umständen Stellfunktionen erfüllen, weil der Raum, in dem die Flüssigkeit enthalten ist, in ausgedehnten Anteilen seiner Begrenzungsfläche von nachgiebigen Wänden begrenzt und durch eine Dämpfungsöffnung mit einem Ausgleichsraum verbunden ist. Über die Flüssigkeit können dadurch nur dann Kräfte von dem Stellglied auf das Arbeitsglied übertragen werden, wenn das Stellglied in eine so schnelle Hin- und Herbewegung versetzt wird, daß das in dem Raum und der Dämpfungsöffnung enthaltene Flüssigkeitsvolumen infolge seiner Trägheitsmasse den Hin- und Herbewegungen zumindest nicht mehr in synchroner Weise zu folgen vermag mit dem Ergebnis, daß die Flüssigkeit als in einem nach außen mehr oder weniger abgeschlossenen Raum konstanten Volumens betrachtet werden kann. Es besteht dann die Möglichkeit, über die Flüssigkeit Kräfte von dem Stellglied auf das Arbeitsglied zu übertragen, was zur aktiven Isolierung akustisch störender Schwingungen benutzt wird. Bei Einleitung von Schwingungen einer niedrigeren Frequenz ist solches nicht mehr möglich. Sie werden bei der vorbekannten Bauform durch Atmungsbewegungen der den Raum begrenzenden Gummiwände passiv isoliert bzw. zur Unterdrückung amplitudenüberhöhter Schwingungsausschläge beim Hindurchpressen von Flüssigkeitsbestandteilen durch die Dämpfungsöffnung hydraulisch gedämpft. Die Herstellung und Verwendung eines solchen Stellelementes ist außerdem durch die Verwendung einer Flüssigkeit als Funktionselement besonders belastet, weil die Einbringung der Flüssigkeit in den Raum und dessen Abdichtung eines besonderen Aufwandes bedürfen und weil es die physikalischen Eigenschaften der zur Verfügung stehenden Flüssigkeiten zumeist erfordern, der elektrischen Isolierung der stromführenden Teile des Stellgliedes sowie der thermisch isolierten Anbringung des Stellelementes besondere Aufmerksamkeit zu widmen.

Der Erfindung liegt die Aufgabe zugrunde, ein Stellelement bereitzustellen, welches wesentlich einfacher herzustellen und zu verwenden sein soll als bisher übliche Ausführungen.

Nach der Erfindung wird ein aktives Stellelement bereitgestellt, welches im Anspruch 1 angegeben ist. Bevorzugte Ausführungsformen sind in den Ansprüchen 2 bis 8 wiedergegeben.

Durch die Verwendung einer Verformungseinheit vollständig aus einem elastomerem Werkstoff ist das erfindungsgemäße Stellelement wesentlich einfacher und wirtschaftlicher herstellbar als die bisherigen Ausführungen, weil es nicht mehr erforderlich ist, eine Flüssigkeit in einem Hohlraum einzufüllen und den Hohlraum anschließend abzudichten. Darüber hinaus ergibt sich durch den Wegfall der Flüssigkeit in den meisten Fällen eine Vereinfachung der elektrischen Isolierung des Stellgliedes so wie eine Verwendungsmöglichkeit auch in der Nähe starker Wärmequellen, weil eine Änderung des Betriebsverhaltens als Folge der Verdampfung von in einem Raum eingeschlossenen Flüssigkeitsbestandteilen nicht mehr zu befürchten sind.

Eine einfache, wirtschaftlich günstige Herstellbarkeit kann dadurch bewirkt werden, daß der elastomere Werkstoff und das Gehäuse einstückig miteinander verbunden sind. Wenn der elastomere Werkstoff und das Arbeitsglied einstückig verbunden sind, erhält man den Vorteil, daß das Gehäuse und das Arbeitsglied unter Zwischenschaltung des elastomeren Werkstoffs miteinander vulkanisiert sind und dadurch Querkräfte und Biegemomente, die auf das Arbeitsglied wirken, nicht gebrauchsdauerverringernd oder funktionsbeeinträchtigend auf das Stellglied übertragen werden. Bei Verwendung von Stellgliedern aus sprödem Werkstoff, die auf Kantenpressung empfindlich reagieren, ist das von hervorzuhebendem Vorteil.

Der elastomere Werkstoff und das Stellglied können ebenfalls einstückig miteinander verbunden sein. Das Stellglied wird über elektrische Anschlüsse angesteuert.

Das elektrisch betätigbare Stellglied kann durch ein Piezoelement gebildet sein, das so eingebaut ist, daß sich beim Anlegen einer Spannung eine Längenänderung in Richtung des Raumes ergibt, der das Verformungselement enthält. Über ein solches Piezoelement können aufgrund der hohen Leistungsdichte große Kräfte auf die Verformungseinheit übertragen werden.

Der weg, der sich bei der elektrischen Aktivierung eines Piezoelementes ergibt, ist allerdings nur sehr gering.

Dieser Nachteil kann beispielsweise dadurch ausgeglichen werden, daß das Piezoelemet schichtweise aufgebaut ist, so daß sich die vergleichsweisen geringen Einzelwege in Verbindung miteinander zu einem der erforderliclichen Größe des Gesamtweges ergänzen. Zur Erzielung eines ausreichend großen Weges des Arbeitsgliedes ist es auch möglich, zwischen diesem und dem Piezoelement bedarfsweise ein beliebiges Ubersetzungsverhältnis vorzusehen. Dazu kann die von dem Piezoelement berührte Fläche des Stellgliedes der Verformungseinheit größer sein als die entsprechende Fläche des Arbeitsgliedes. Das Flächenverhältnis überträgt sich bei einer Aktivierung des Stellgliedes durch das Piezoelement maßstäblich auf die Größe der Relativbewegung des Arbeitsgliedes, was es ermöglicht, die Bewegungsamplitude in Abhängigkeit von den jeweiligen Gegebenheiten des Anwendungsfalles auf optimale Werte festzulegen. Das Funktionsprinzip entspricht im wesentlichen den Gegebenheiten eines hydraulischen Kolbensystems. Im Bereich des allgemeinen Maschinenbaus hat es sich als vorteilhaft bewährt, wenn ein Flächen- und Hubverhältnis von mindestens etwa 1:10 zur Anwendung gelangt.

Nach einer anderen Ausgestaltung kann das Stellglied durch einen magnetostriktiven Steller gebildet sein. Auch in diesem Falle können große Stellkräfte erzielt werden. Eine Ubersetzung kann, wie vorstehend beschrieben, ebenfalls zur Anwendung gelangen.

Außerdem können als Steller auch elektromagnetische oder elektrodynamische Systeme Anwendung finden.

Das erfindungsgemäße Stellelement kann sowohl in statischen als auch in dynamischen Anwendungsfällen als wegeinstellendes und/oder kräfteregulierendes Bauteil eingesetzt werden. Durch einen modulhaften Aufbau lassen sich die Anwendungsmöglichkeiten gegebenenfalls in Kombination mit bereits vorhandenen passiven und/oder aktiven Federungs- und/oder Dämpfungssystemen ermöglichen. Insbesondere kann das erfindungsgemäße Stellelement in Verbindung mit an sich bekannten Gummilagern zur Anwendung gelangen, wobei diese bedarfsweise auch eine hydraulische Dämpfungseinrichtung aufweisen können.

Das erfindungsgemäße Stellelement kann auch in Verbindung mit Schwingungstilgern oder selbst als aktiver Schwingungstilger zur Anwendung gelangen. Im letztgenannten Falle hat es sich als zweckmäßig erwiesen, wenn das Gehäuse die Funktion der Trägheitsmasse übernimmt und über das in gezielter Weise hin- und herbewegte Arbeitsglied mit in dem Teil verbunden wird, das die zu reduzierenden Schwingungen aufweist. Das Bewegungsverhalten eines solchen Schwingungstilgers kann während der bestimmungsgemäßen Verwendung derart verändert werden, daß eine Tilgerwirkung breitbandig in einem besonders großen Frequenzbereich genutzt werden kann oder beim Auftreten von Schwingungen einer beliebigen Frequenz. Dabei ist es von besonderem Vorteil, daß die Tilgerwirkung nicht nur in bereits eingeschwungenem Betriebszustand genutzt werden kann, sondern darüber hinaus auch in transienten Betriebszuständen, die durch eine zeitliche Veränderung charakterisiert sind.

Gummilager neigen bekanntlich dazu, hochfrequente Schwingungen, beispielsweise akustisch störende Schwingungen, weniger gut zu isolieren als tieffrequente Schwingungen. Ihre Isolierung von einem Gummilager ist daher ganz besonders vorteilhaft. Es ist in diesem Sinne möglich, das erfindungsgemäße Stellelement mit einem Gummilager in einer Reihenschaltung anzuordnen und derart zu betreiben, daß Schwingungen einer bestimmten Frequenz und Amplitude das Gummilager nicht erreichen. Hierzu ist es erforderlich, das Stellelement in eine, bezogen auf die aufzunehmenden Schwingungen, gegenphasige Relativbewegung zu versetzen. Die dazu erforderlichen Sensoren und Schaltungen sind bekannt. Die bisher zu diesem Zweck vorgeschlagenen, elektromagnetischen Antriebe des Stellelementes ermöglichen aber nicht die Übertragung der im allgemeinen Maschinenbau erforderlichen Kräfte und sind darüber hinaus für die Isolierung solcher Schwingungen wesentlich zu träge. Erst die erfindungsgemäße Ausführung schafft hier Abhilfe. Sie läßt sich in einem Frequenzbereich von 0 bis 5 kHz problemlos verwenden. Eine Parallelschaltung zu einem Gummilager ist ebenfalls möglich.

Das erfindungsgemäße Stellelement wird nachfolgend anhand der beigefügten Zeichnungen weiter erläutert. Die Figuren 1,2 und 3 zeigen die zu berücksichtigenden Einzelkomponenten teilweise in schematischer Darstellung.

In Figur 1 ist ein aktives Stellelement mit einem elektrisch betätigbaren Stellglied und einem in gleicher Richtung bewegbaren Arbeitsglied gezeigt.

In Figur 2 ist ein Ausführungsbeispiel eines aktiven Stellelements gezeigt, bei dem sich die Bewegungsrichtung des elektrisch betätigbaren Stellgliedes achsparallel erstreckt. Die Bewegungsrichtung der beiden zur Anwendung gelangenden Arbeitsglieder steht senkrecht auf der Bewegungsrichtung des Stellgliedes, wobei sich das Stell- und die Arbeitsglieder jeweils in Richtung des Raumes hin- und herbewegen.

In Figur 3 ist ein weiteres Ausführungsbeispiel eines aktiven Stellelements gezeigt, wobei ringförmige oder mehrere einzelne, gleichmäßig in Umfangsrichtung verteilte Stellglieder zur Anwendung gelangen.

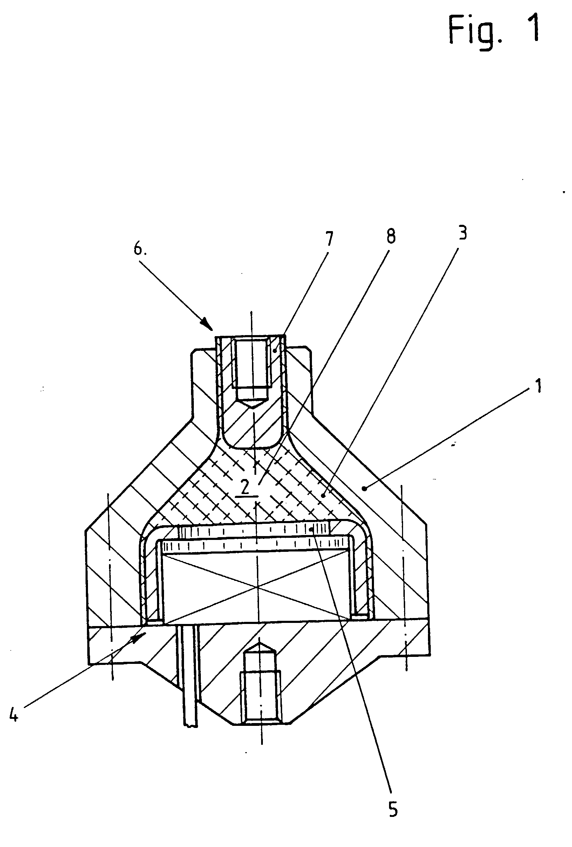

In den Figuren 1, 2 und 3 ist jeweils ein Ausführungsbeispiel eines aktiven Stellelements gezeigt, wobei in einem Gehäuse 1, bevorzugt aus metallischem Werkstoff, eine im wesentlichen nicht komprimierbare Verformungseinheit 3 aus einem elastomerer Werkstoff 8 angeordnet ist und das Gehäuse 1 vollständig ausfüllt. Der elastomere Werkstoff 8 umschließt sowohl die Arbeitsglieder 7, 7.1, 7.2 als auch die elektrisch betätigbaren Stellglieder 5, die hier als Piezoelemente ausgebildet sind.

In Figur 1 erfolgt bei Betätigung des Piezoelements eine Verlagerung des Stellgliedes 5 in gleicher Richtung, wobei das Arbeitsglied 7 eine achsparallele Bewegung ausführt. Die Größe der Auslenkbewegung des Arbeitsglieds 7 ist abhängig von dem Verstellweg des Stellglieds 5 und der zwischengeschalteten Übersetzung und kann dadurch den jeweiligen Gegebenheiten des Anwendungsfalles problemlos angepaßt werden.

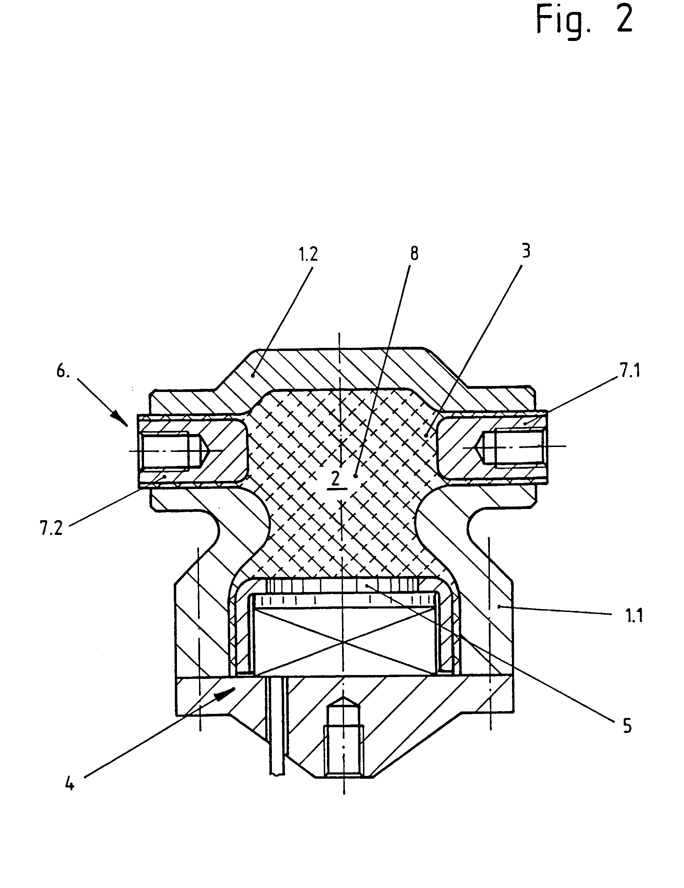

Bei dem in Figur 2 dargestellten Ausführungsbeispiel ist die Bewegungsrichtung des elektrisch betätigbaren Stellgliedes 5 der Bewegungsrichtung der beiden Arbeitsglieder 7.1, 7.2 senkrecht zugeordnet. Die beiden Arbeitsglieder sind bei einer ineinander übergehenden Bewegungsachse einander gegenüberliegend angeordnet und gegensinnig bewegbar. Nach der Ankopplung der Arbeitsglieder an einander gegenüberliegende, körperliche Strukturen lassen sich hierdurch Kräfte und gegebenenfalls Schwingungen in die Strukturen einleiten, um unter Ausnutzung von Interferenzeffekten eine Auslöschung oder Minimierung vorhandenen Körperschalls zu erzielen. Ein vorliegendes Gesamtschwingungsverhalten einer solchen Struktur läßt sich hierdurch so verändern, daß zumindest an bestimmten Stellen der Struktur die Schwingungen ganz beseitigt oder minimiert sind. Beispielsweise in bezug auf die Unterdrückung der Einleitung von Körperschall in den Innenraum eines Fahrzeugs und damit die Verbesserung des Komforts in einem solchen ist das von großem Vorteil.

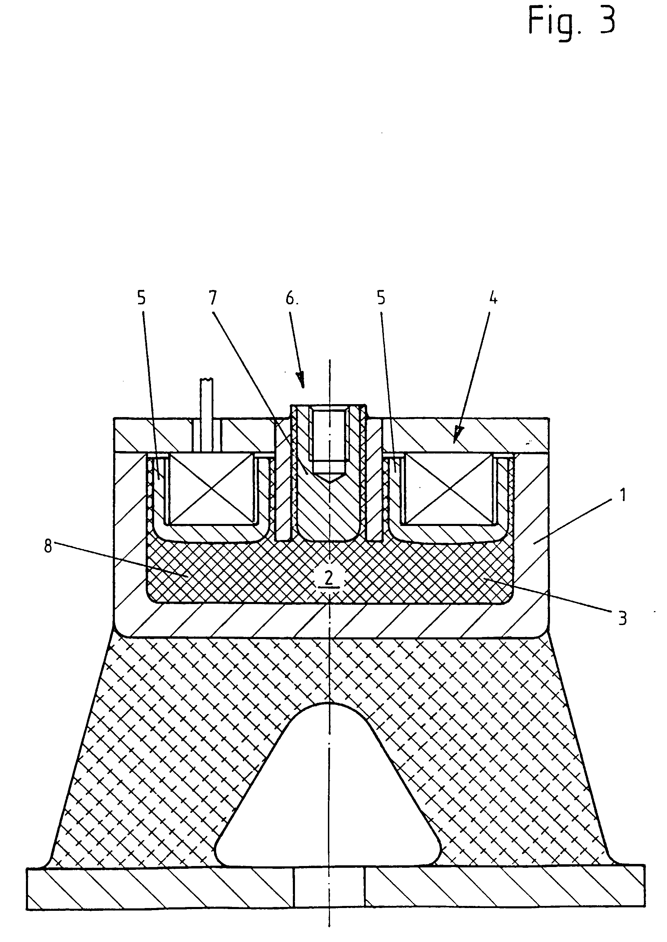

Das in Figur 3 dargestellte Stellelement weist im Gegensatz zu den Figuren 1 und 2 mehrere elektrisch betätigbare Stellglieder 5 auf, die gleichmäßig in Umfangsrichtung um das Arbeitsglied 7 verteilt sind. Eine rotationssymmetrische Ausbildung nur eines Stellgliedes, das das Arbeitsglied ringförmig umschließt, ist ebenfalls möglich. Diese Bauform zeichnet sich durch eine besonders geringe Bauhöhe in axialer Richtung aus und gelangt durch ihren flachen Aufbau bevorzugt in Kombination mit Gummilagern, die gegebenenfalls eine hydraulische Dämpfungseinrichtung haben können, zur Anwendung.

Die in den Figuren 1, 2 und 3 dargestellten Ausführungsbeispiele können in verschiedenen Anwendungsbereichen Verwendung finden. So besteht beispielsweise auch die Möglichkeit, das in Figur 3 gezeigte Stellelement mit einem hydraulisch gedämpften Motor- oder Fahrwerks lager zu kombinieren und zwischen einer Verbrennungskraftmaschine bzw. dem Fahrwerk und der Karosserie eines Kraftfahrzeuges anzuordnen, um hochfrequente Schwingungen, die durch den Motor oder den Fahrbahnbelag angeregt werden, aufzunehmen und zu isolieren.

Die dargestellten Stellelemente weisen einen einfachen Aufbau auf, wobei Querkräfte und Biegemomente, die auf das Arbeitsglied 7 wirken, vom Stellglied 5 ferngehalten werden. Dadurch ergeben sich gute Gebrauchseigenschaften während einer langen Gebrauchsdauer und eine vielseitige Verwendungsmöglichkeit.

## Patentansprüche

1. Aktives Stellelement, mit einem von einem unnachgiebigen Gehäuse (1) umschlossenen Raum (2), der durch eine im wesentlichen inkompressible Verformungseinheit (3) vollständig ausgefüllt ist, wobei der Raum (2) an einer ersten Stelle durch zumindest ein elektrisch betätigbares Stellglied (5) und an einer zweiten Stelle durch zumindest ein Arbeitsglied (7) begrenzt ist, wobei das Stell- und das Arbeitsglied (5, 7) in Richtung des Raumes (2) hin- und herbewegbar sowie gegenüber dem Gehäuse (1) abgedichtet sind und wobei die Verformungseinheit (3) vollständig aus einem elastomeren Werkstoff (8) besteht, **dadurch gekennzeichnet,** daß die Verformungseinheit (3) das Arbeitsglied (7) und das Stellglied (5) umschließt, sowie mit dem Gehäuse (1) und/oder dem Arbeitsglied (7) und/oder dem Stellglied (5) einstückig verbunden ist.

2. Stellelement nach Anspruch 1, dadurch gekennzeichnet, daß das Stellglied (5) durch ein Piezoelement bewegbar ist.

3. Stellelement nach Anspruch 1, dadurch gekennzeichnet, daß das Stellglied (5) durch einen magnetostriktiven Steller gebildet ist.

4. Stellelement nach einem der vorangehenden Ansprüche, **dadurch gekennzeichnet,** daß das Stellglied (5) und das Arbeitsglied (7) in gleicher Richtung bewegbar sind.

5. Stellelement nach einem der Ansprüche 1 bis 3, **dadurch gekennzeichnet**, daß die Bewegungsrichtung vom Arbeitsglied (7) senkrecht zu der Bewegungsrichtung des Stellglieds (5) ist.

6. Stellelement nach einem der Ansprüche 1 bis 3, **dadurch gekennzeichnet,** daß mehrere, einzelne und in Umfangsrichtung um das Arbeitsglied (7) gleichmäßig angeordnete Stellglieder vorgesehen sind.

7. Stellelement nach einem der vorangehenden Ansprüche, **gekennzeichnet durch** die Verwendung in Verbindung mit einem Gummilager.

8. Stellelement nach einem der Ansprüche 1 bis 6, **gekennzeichnet durch** die Verwendung als Schwingungstilger.

## Claims

1. An active actuator with a space (2) which is surrounded by an inflexible housing (1) and is completely filled by an essentially incompressible deformation unit (3), the space (2) being bounded at a first location by at least one electrically actuable actuating element (5) and at a second location by at least one operating element (7), the actuating and the operating element (5, 7) being movable backwards and forwards in the direction of the space (2) and being sealed off relative to the housing (1), and the deformation unit (3) being composed completely of an elastomeric material (8), characterized in that the deformation unit (3) surrounds the operating element (7) and the actuating element (5) and is connected integrally to the housing (1) and/or the operating element (7) and/or the actuating element (5).

2. An actuator according to claim 1, characterized in that the actuating element (5) can be moved by means of a piezoelectric element.

3. An actuator according to claim 1, characterized in that the actuating element (5) is formed by a magneto-strictive actuating member.

4. An actuator according to any one of the preceding claims, characterized in that the actuating element (5) and the operating element (7) are movable in the same direction.

5. An actuator according to any one of claims 1 to 3, characterized in that the direction of motion of the operating element (7) is perpendicular to the direction of motion of the actuating element (5).

6. An actuator according to any one of claims 1 to 3, characterized in that a plurality of individual actuating elements arranged uniformly in the circumferential direction around the operating element (7) are provided.

7. An actuator according to any one of the preceding claims, characterized by its use in conjunction with a rubber support.

8. An actuator according to any one of claims 1 to 6, characterized by its use as a vibration absorber.

## Revendications

1. Dispositif de positionnement actif, comportant un espace (2) entouré d'un boîtier (1) inflexible, qui est intégralement rempli par une unité de déformation (3) essentiellement incompressible, l'espace (2) étant limité, à un premier endroit, par au moins un élément de positionnement (5) pouvant être actionné électriquement et, à un deuxième endroit, par au moins un élément de travail (7), l'élément de positionnement et l'élément de travail (5, 7) pouvant effectuer un mouvement de va-et-vient en direction de l'espace (2) et étant aussi rendus étanches par rapport au boîtier (1) et l'unité de déformation (3) étant intégralement composée d'une matière élastomère (8), caractérisé en ce que l'unité de déformation (3) entoure l'élément de travail (7) et l'élément de positionnement (5), et est aussi liée solidairement avec le boîtier (1) et/ou l'élément de travail (7) et/ou l'élément de positionnement (5).

2. Dispositif de positionnement selon la revendication 1, caractérisé en ce que l'élément de positionnement (5) peut être mis en mouvement par un élément piézo-électrique.

3. Dispositif de positionnement selon la revendication 1, caractérisé en ce que l'élément de positionnement (5) est formé par un vérin magnétostrictif.

4. Dispositif de positionnement selon l'une des revendications précédentes, caractérisé en ce que l'élément de positionnement (5) et l'élément de travail (7) peuvent être mis en mouvement dans le même sens.

5. Dispositif de positionnement selon l'une des revendications 1 à 3, caractérisé en ce que le sens de déplacement de l'élément de travail (7) est perpendiculaire au sens de déplacement de l'élément de positionnement (5).

6. Dispositif de positionnement selon l'une des revendications 1 à 3, caractérisé en ce que plusieurs éléments différents de positionnement disposés régulièrement autour de l'élément de travail (7) sont prévus.

7. Dispositif de positionnement selon l'une des revendications précédentes, caractérisé par son utilisation en lien avec un logement en caoutchouc.

8. Dispositif de positionnement selon l'une des revendications 1 à 6, caractérisé par son utilisation en tant qu'amortisseur d'oscillations.
